# EUROPÄISCHE PATENTSCHRIFT

(11) **EP 0 590 257 B1**
(45) Veröffentlichungstag und Bekanntmachung des Hinweises auf die Patenterteilung: **01.05.1996**
(21) Anmeldenummer: 93111633.9
(22) Anmeldetag: 21.07.1993
(51) Int. Cl.: B62H 3/02

(54) **Ständer für Fahrräder**
Bicycle holder
Support de bicyclettes

(30) Priorität: 29.09.1992 DE 9213089 U
(43) Veröffentlichungstag der Anmeldung: 06.04.1994
(73) Patentinhaber: EISEN- UND DRAHTWERK ERLAU AKTIENGESELLSCHAFT, D-73431 Aalen (DE)
(72) Erfinder: Müller, Anton, D-73432 Aalen-Unterkochen (DE)
(74) Vertreter: Kohl, Karl-Heinz

(56) Entgegenhaltungen:
- DE-A- 3 238 404
- DE-U- 9 011 050
- NL-A- 8 204 046

## Beschreibung

Die Erfindung betrifft einen Ständer für Fahrräder nach dem Oberbegriff des Anspruches 1.

Zum Parken von Fahrrädern ist beispielsweise an Bahnhöfen, Schwimmbädern und dergleichen häufig eine Vielzahl von Fahrradständern vorgesehen, an denen die Fahrräder abgestellt und befestigt werden können. Ein Fahrradständer dieser Art ist aus der DE-U-90 11 050 bekannt. Er besteht aus einem vertikalen Stahlpfosten, der im Erdreich verankert ist und an seinem oberen freien Ende etwa rechtwinklig abgebogen ist. An diesem Ende ist ein Kalter mit einem Klemmteil befestigt, das in dem abgewinkelten Ende mit einem Sicherungsstift gehalten wird. Nachteilig ist hierbei, daß der Halter nicht ausgewechselt werden kann.

Es ist auch ein Ständer bekannt (NL-A-82 04 046), bei dem der relativ aufwendig ausgebildete Halter über eine Stange in einem Ständerarm gehalten wird, der an einem Standbein verschraubt ist. Zudem wird der Halter mit dem Ständerarm über ein Schloß verbunden, das durch Halteteile des Halters und des Ständerarmes ragt. Diese Befestigung ist aufwendig, zumal besondere Halteteile am Halter und am Ständerarm und auch ein zusätzliches Schloß erforderlich sind. Entsprechend ist auch das Lösen des Halters vom Ständer umständlich und zeitaufwendig. Nachteilig ist ferner, daß zum Beispiel Fahrraddiebe durch Beschädigen des Schlosses den Halter ohne weiteres vom Ständer lösen können.

Der Erfindung liegt die Aufgabe zugrunde, den gattungsgemäßen Ständer so auszubilden, daß der Halter beispielsweise bei Beschädigung einfach und schnell ausgewechselt werden kann, andererseits der Halter aber nicht auf einfache Weise unbeabsichtigt vom Träger gelöst werden kann.

Diese Aufgabe wird bei einem Fahrradständer der gattungsbildenden Art erfindungsgemäß mit den kennzeichnenden Merkmalen des Anspruches 1 gelöst.

Infolge der erfindungsgemäßen Ausbildung des Sicherungsteiles ist es möglich, durch Einschlagen einer der Hülsen den Halter vom Träger zu losen, so daß er einfach von ihm abgenommen und gegen einen anderen Halter ausgetauscht werden kann. Besonders vorteilhaft ist es, daß das Sicherungsteil so ausgebildet ist, daß zum Einschlagen der jeweiligen Hülse ein besonderes Werkzeug erforderlich ist, so daß der Halter nicht unbeabsichtigt vom Träger gelöst werden kann. Dadurch ist eine hohe Sicherheit gegen Diebstähle gewährleistet.

Weitere Merkmale der Erfindung ergeben sich aus den weiteren Ansprüchen, der Beschreibung und den Zeichnungen.

Die Erfindung wird nachstehend an Hand zweier in den Zeichnungen dargestellter Ausführungsbeispiele näher beschrieben. Es zeigt:
- Fig. 1: einen erfindungsgemäßen Ständer für Fahrräder in Ansicht,
- Fig. 2: in vergrößerter Darstellung einen Halter des Ständers nach Fig. 1 in Ansicht gemäß Pfeil II in Fig. 1,
- Fig. 3: den Ständer nach Fig. 1 in vergrößerter Darstellung,
- Fig. 4: eine Ansicht auf einen Träger des Ständers nach Fig. 1 gemäß Pfeil IV in Fig. 3,
- Fig. 5: den Halter nach Fig. 2 in vergrößerter Darstellung und im Schnitt gemäß der Linie V-V in Fig. 2,
- Fig. 6: in Ansicht und teilweise im Schnitt ein Werkzeug zur Montage eines Sicherungsteiles zur Befestigung des Halters am Träger des Ständers gemäß Fig. 1,
- Fig. 7: ein Werkzeug zur Demontage des Halters, teilweise im Schnitt und teilweise in Ansicht,
- Fig. 8: in einer Darstellung entsprechend Fig. 1 zwei zu einer Doppeleinheit miteinander verbundene erfindungsgemäße Ständer,
- Fig. 9: in vergrößerter Darstellung einen Schnitt längs der Linie IX-IX in Fig. 8 durch den Ständer.

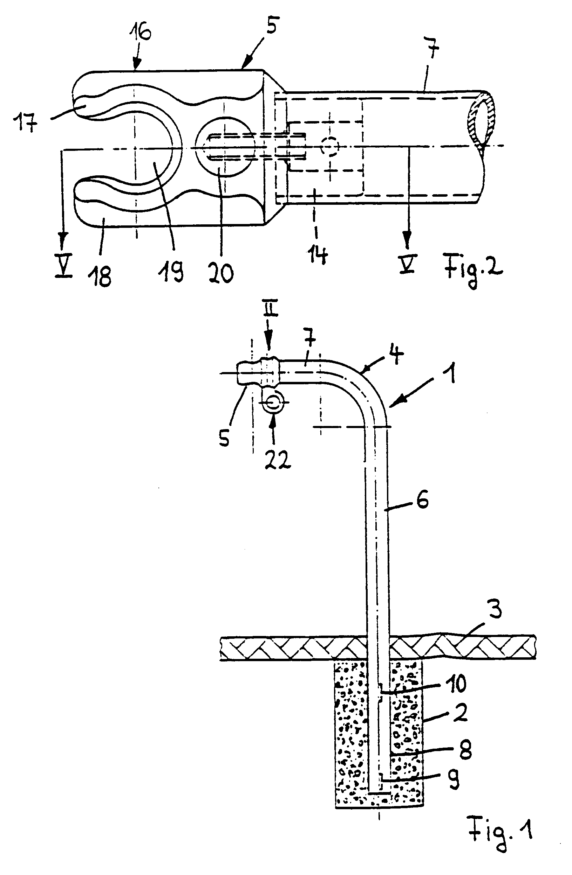

Fig. 1 zeigt einen Ständer 1, der im Untergrund 2 sowie in einem Belag 3 (beispielsweise eines Gehsteges oder dgl.) verankert ist. Am Ständer 1 kann ein Fahrrad befestigt werden.

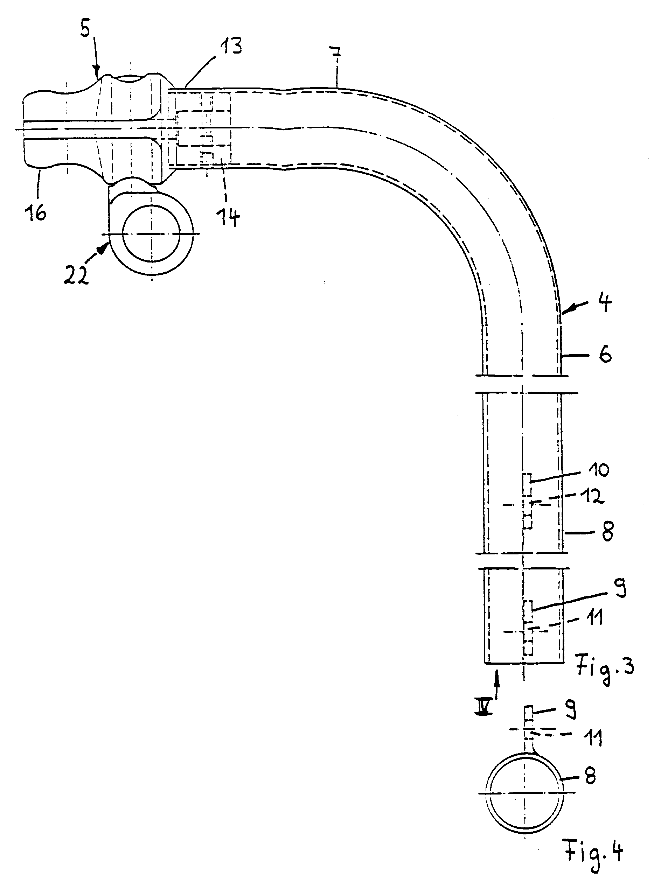

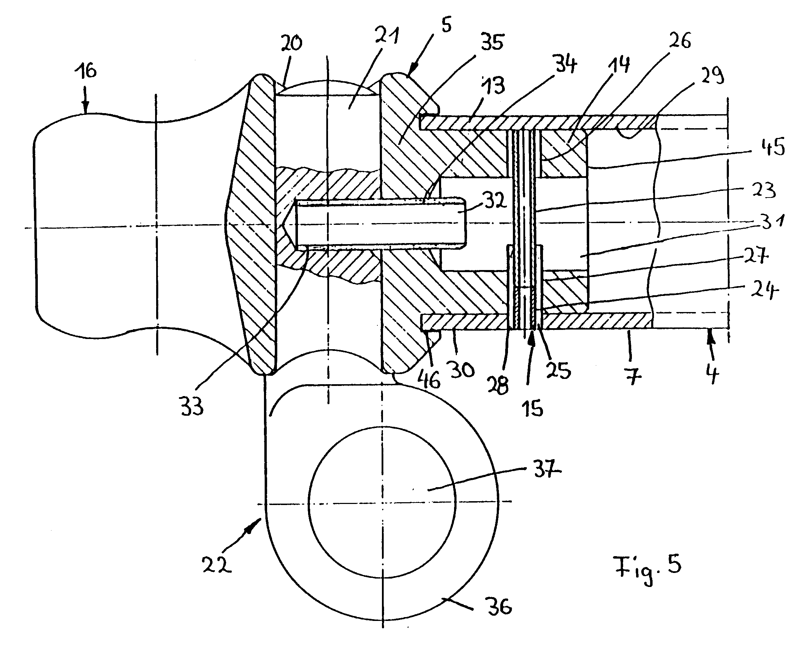

Der Ständer 1 hat einen Träger 4, der aus einem vorzugsweise L-förmig gekrümmten Rohr besteht, das als Standbein vorgesehen ist und einen Halter 5 trägt. Am Halter kann das (nicht dargestellte) Fahrrad mit einem Mittel- bzw. Sitzrohr befestigt werden, das hierzu in einer Klemmöffnung des Halters geklemmt wird. Der Ständer 4 wird mit seinem längeren Vertikalschenkel 6 im Boden 2, 3 verankert. Der kürzere Schenkel 7 der Trägers 4 ist etwa rechtwinklig zum Schenkel 6 abgebogen und wesentlich kürzer als dieser. Am Ende 8 des längeren Schenkels 6 sind zur besseren Verankerung im Boden 2 radial nach außen ragende Stege 9, 10 vorgesehen (vgl. auf Fig. 3 und 4). Die Stege 9, 10 liegen mit Abstand übereinander und weisen Durchgangsöffnungen 11, 12 für Befestigungsteile, wie Bolzen, Schrauben und dgl. auf.

In das freie Ende 13 des Rohrschenkels 7 ist der Halter 5 mit einem zylindrischen Ansatz 14 (Fig. 5) gesteckt. Zur Lagesicherung des Halters 5 am Schenkel 7 ist ein mehrteilig ausgebildetes Sicherungsteil 15 vorgesehen.

Zum Festklemmen der Fahrradstange weist der Kalter 5 ein Klemmteil 16 auf (Fig. 2), das zwei einander gegenüberliegende Klemmschenkel 17 und 18 hat, die in entgegengesetzte Richtung wie der Ansatz 14 ragen. Die Klemmschenkel begrenzen eine Klemmaufnahme 19, in die das Mittelrohr des Fahrrades zur Lagesicherung des Fahrrades gedrückt wird.

Die Klemmschenkel 17, 18 erstrecken sich über etwa die halbe Länge des Klemmteiles 16, das in seiner anderen, an den Ansatz 14 anschließenden Hälfte eine Durchgangsöffnung 20 für ein bolzenartiges Steckteil 21 eines weiteren Sicherungsteiles 22 bzw. eines Armierungsteiles aufweist (Fig. 5).

Das erste Sicherungsteil 15 besteht aus einer geteilten inneren Hülse 23, 24 sowie einer äußeren Hülse 25. Das eine Hülsenteil 23 ist länger ausgebildet als das andere Hülsenteil 24 und die äußere Hülse 25. Das Hülsenteil 24 ist jedoch kürzer als die äußere Hülse 25. Die Hülsenteile 23, 24 liegen in Längsrichtung stoßend hintereinander. Die äußere Hülse 25 umgibt das kürzere Hülsenteil 24 sowie den daran anschließenden Abschnitt des Hülsenteiles 23. Zur Aufnahme des Sicherungsteiles 25 weist der zylindrische Ansatz 14 miteinander fluchtende Durchstecköffnungen 26 und 27 und das Schenkelende 13 eine mit der Öffnung 27 fluchtende Öffnung 28 auf. Das Hülsenteil 23 stützt sich mit einem Ende an der Innenwand 29 des Schenkelendes 30 ab, während sein anderes Ende etwa in halber Länge der Durchstecköffnung 27 liegt. Der andere Hülsenteil 24 erstreckt sich bis an die Außenseite 30 des Schenkelendes 13. Die äußere Hülse 25 erstreckt sich von der Außenseite 30 des Schenkelendes bis in eine Vertiefung 31 des Ansatzes 14 des Halters 5. Die Länge der äußeren Hülse 25 ist geringfügig kleiner als die lichte Weite der Vertiefung 31, so daß die Hülse 25 zum Lösen des Halters 5 vom Träger 1 bis in die Vertiefung verschoben werden kann, wie noch erläutert wird. Die äußere Hülse 25 liegt mit Preßsitz in der Öffnung 27 und mit Preßsitz auf den Teilen 23, 24. In der Öffnung 26 liegt das Hülsenteil 23 mit radialem Spiel; die Durchstecköffnungen 26 und 27 haben vorzugsweise gleiche lichte Weite.

In der Durchgangsöffnung 20 des Halters 5, deren Achse senkrecht zu den Klemmschenkeln 17, 18 und zur Achse der Vertiefung 31 verläuft, liegt das bolzenartige Steckteil 21 des Sicherungsteiles 22. Das Steckteil 21 ist am Halter 5 mit einer Spannhülse 32 gesichert, die senkrecht zum Steckteil 21 liegt. Die Spannhülse 32 ragt mit ihrer einen Hälfte in eine Sacklochbohrung 33 des Steckteiles 21. Das andere Ende der Spannhülse 32 ragt durch eine Durchgangsöffnung 34 des Bodens 35 des zylindrischen Ansatzes 14 bis in die vorzugsweise zylindrische Vertiefung 31, die in Richtung auf die Klemmschenkel 17, 18 durch den Boden 35 des Ansatzes 14 geschlossen ist.

Durch die Spannhülse 32 wird der Steckteil 21 des Sicherungsteiles 22 in der Durchgangsöffnung 20 des Halters 5 zuverlässig gesichert und gehalten. Da die Spannhülse 32 in die Vertiefung 31 ragt, die ihrerseits bis zur freien Stirnseite 45 des Ansatzes 14 reicht, läßt sich die Spannhülse ohne Schwierigkeiten in die radiale Sacklochbohrung 33 des Steckteiles 21 einschlagen.

Nach der Montage des Sicherungsteiles 22 wird der Halter 5 mit seinem Ansatz 14 in das freie Ende 13 des Trägerschenkels gesteckt. Der Boden 35 des Ansatzes 14 ist im Durchmesser vergrößert, so daß er beim Einschieben des Ansatzes 14 als Anschlag für den Trägerschenkel dienen kann. Dadurch läßt sich der Halter 5 einfach so lagegenau in den Trägerschenkel 7 stecken, daß die Öffnung 28 im Trägerschenkel 7 mit der Durchstecköffnung 27 des Ansatzes 14 fluchtet. Das freie Ende 13 des Trägerschenkels 7 greift in eine Ringnut 46 ein, die im Boden 35 des Ansatzes 14 vorgesehen ist.

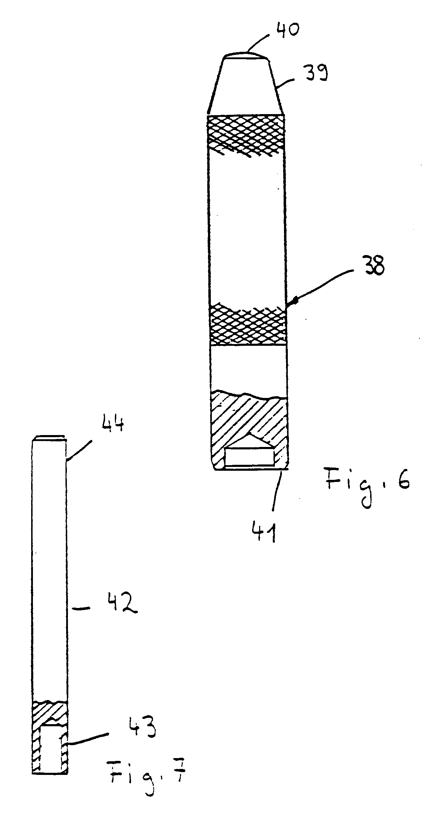

Durch die Durchstecköffnung 27 werden anschließend die Hülsenteile 23, 24 gesteckt. Da die Durchstecköffnung 27 größeren Durchmesser hat als die Hülsenteile 23, 24, lassen sie sich mühelos einschieben. Die Hülsenteile 23, 24 werden so weit eingeschoben, bis das längere Hülsenteil 23 in die gegenüberliegende Durchstecköffnung 26 ragt und an der Innenseite des freien Endes 13 des Trägerschenkels 7 anschlägt. Anschließend wird die Hülse 25 mit einem Montagewerkzeug 38 (Fig. 6) in die Durchstecköffnung 27 eingeschlagen. Durch die Hülse 25 werden die beiden Hülsenteile 23, 24 zusammengehalten, die zusammen mit der Hülse 25 eine Verbundspannhülse bilden. Durch sie werden der Träger 4 und der Halter 5 sicher miteinander verbunden. Die Verbundspannhülse durchsetzt die Vertiefung 31 des Halters 5 diametral.

Das Steckteil 21 ist einstückig mit einer stabil ausgebildeten Anschlußöse 36 zum Einhängen beispielsweise einer Sicherungskette, eines Sicherungsteiles oder eines Sicherungsbügels oder dgl. ausgebildet. Durch die Ösenöffnung 37 kann die Sicherungskette oder dgl. bequem durchgezogen werden. Die Sicherungskette ist außerdem am jeweiligen Fahrradrahmenteil befestigt.

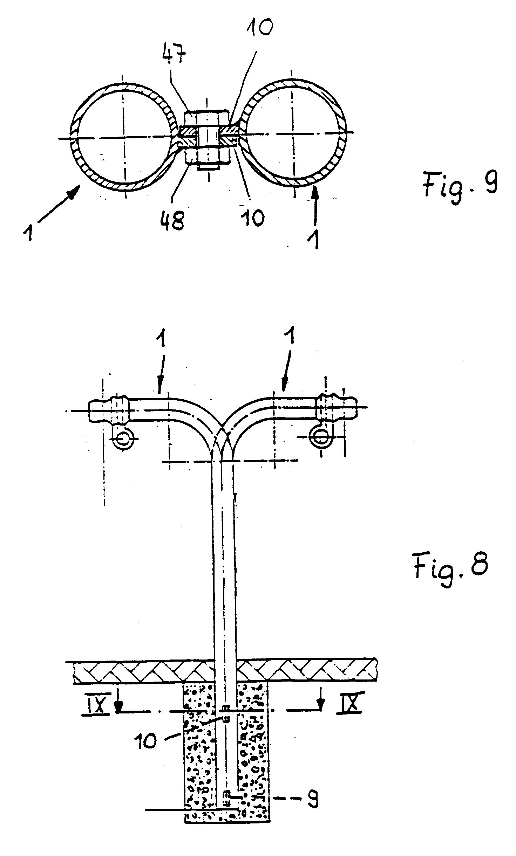

Vorzugsweise besteht der Halter 5 aus Kunststoff, der eine kostengünstige Fertigung erlaubt und keiner Korrosion ausgesetzt ist. Der Träger 4 besteht vorteilhaft aus korrosionsbeständigem Stahl, so daß er auch bei ungünstigen Witterungsbedingungen eine lange Lebensdauer aufweist. Durch den weit vom Rohrschenkel 6 abstehenden Rohrschenkel 7 können beliebige Fahrräder am Ständer 1 geparkt werden, wozu sie mit einem Mittel- bzw. Sitzrohr in den Halter 5 bzw. dessen Klemmteil 16 eingepreßt werden. Sobald das Mittelrohr des Fahrrades in der Klemmaufnahme 16 gehalten und von den Klemmschenkeln 17, 18 umfaßt wird, ist das Fahrrad einwandfrei am Ständer gesichert und kann nicht mehr umkippen. Der Halter 5 ist über das Sicherungsteil 15 einwandfrei am Träger 4 gehalten. Zusätzlich ist als Diebstahlsicherung für das Fahrrad eine Sicherungskette, ein Sicherungsseil oder ein Sicherungsbügel vorgesehen, der durch die Ösenöffnung 37 des Sicherungsteiles 22 gezogen und am jeweiligen Fahrradrahmenteil befestigt wird. Durch die beschriebene mehrteilige Ausbildung kann das Sicherungsteil 15 nur mit dem Spezialwerkzeug 38, wie es in Fig. 6 dargestellt ist, montiert werden. Das Werkzeug 38 ist als Schlaghülse ausgebildet, deren freies Ende 39 kegelstumpfförmig ausgebildet ist. Es hat eine abgerundete Spitze 40, mit der es an die Hülse 25 angelegt wird. Danach wird z.B. mit einem Hammer gegen das andere Ende 41 der Schlaghülse 38 geschlagen, bis die Hülse 25 die in Fig. 5 dargestellte montierte Lage einnimmt. In dieser Lage kann die Hülse 25 nur mit einem weiteren Werkzeug 42 (Fig. 7) aus der dargestellten Lage in eine Freigabestellung gebracht werden. Zur Demontage des Sicherungsteiles 15 muß zunächst mit dem ebenfalls als Schlaghülse ausgebildeten Demontagewerkzeug 42 die Hülse 25 nach innen bis in die Vertiefung 31 verschoben werden. Das Werkzeug 42 ist ein Stahlstift, dessen eines Ende 43 hülsenförmig ausgebildet ist. Mit diesem Ende wird das Werkzeug 42 an die Hülse 25 angesetzt und dann durch Krafteinwirkung auf ihr anderes Ende so weit nach innen in Richtung auf die Vertiefung 31 geschlagen, bis die Hülse 25 in der Vertiefung liegt. Dann sind die beiden Hülsenteile 23, 24 voneinander frei, so daß das Hülsenteil 24 herausgezogen werden kann. Dann kann der Halter 5 durch Herausziehen des Steckteiles 14 vom Träger 4 gelöst werden.

Die geteilte Ausbildung des Sicherungsteiles 15 hat den Vorteil, daß der Halter 5 vom Träger 4 nicht unbefugt dadurch gelöst werden kann, daß das Sicherungsteil mit einem Bolzen eines größeren oder kleineren Durchmesseres gelöst werden kann, indem das Sicherungsteil einfach durchgeschlagen wird. Zum Lösen des Trägers 5 ist das speziell ausgebildete Demontagewerkzeug 42 erforderlich, dessen Ende 43 an die äußere Hülse 25 angepaßt sein muß. Fahrraddiebe haben dadurch keine Möglichkeit, den Halter 5 vom Träger 4 zu trennen. Als weitere Diebstahlsicherung ist das zweite Sicherungsteil 22 bzw. Armierungsteil vorgesehen, das durch die aus gehärtetem Stahl bestehene Spannhülse 32 gebildet wird. Da sie sich bis in den Trägerschenkel 7 erstreckt, kann ein Fahrraddieb nicht den aus Kunststoff bestehenden Halter 5 unmittelbar vor der Stirnseite des Trägerschenkels 7 durchtrennen, da er dann auf die Spannhülse 32 trifft.

Somit wird durch die beiden Sicherungsteile 15, 32 zuverlässig verhindert, daß ein am Ständer 1 gesichertes Fahrrad gestohlen werden kann.

Bei der Ausführungsform nach den Fig. 8 und 9 sind zwei Ständer 1 zu einer Doppeleinheit verbunden. Die beiden Ständer, die gleiche Ausbildung haben wie die Ausführungsform nach den Fig. 1 bis 7, sind um 180° verdreht zueinander und mit geringem Abstand nebeneinander angeordnet. Die Ständer 1 liegen mit ihren Stegen 9, 10 aneinander (Fig. 9). Durch Öffnungen in den Stegen 9, 10 ragen Schraubbolzen 47, auf die jeweils eine Mutter 48 geschraubt wird. Auf diese Weise lassen sich die Ständer 1 leicht gegeneinander verspannen.

## Patentansprüche

1. Ständer (1) für Fahrräder, mit einem aufwärts ragenden Träger (4), der einen im wesentlichen rechtwinklig zu ihm verlaufenden Ständerteil (7) hat, an dem ein Halter (5) mit mindestens einem Sicherungsteil (15) befestigt ist, das durch Öffnungen (26, 27 und 28) im Halter (5) und im Ständerteil (7) ragt,
dadurch gekennzeichnet, daß das Sicherungsteil (15) als Verbundspannhülse mit mindestens einer inneren und einer äußeren Hülse (23, 24 und 25) ausgebildet ist, von denen die äußere Hülse (25) mit Preßsitz in der Öffnung (27) des Halters (5) und mit Preßsitz auf der inneren Hülse (23, 24) sitzt.

2. Ständer nach Anspruch 1 dadurch gekennzeichnet, daß das Sicherungsteil (15) in sich gestuft ausgebildet ist und vorzugsweise aus einer geteilten inneren Hülse (23, 24) und einer äußeren Hülse (25) besteht.

3. Ständer nach Anspruch 2, dadurch gekennzeichnet, daß die inneren Hülsenteile (23, 24) unterschiedlich lang sind, und daß vorzugsweise die äußere Hülse (25) kürzer ausgebildet ist als die innere Hülse (25, 26).

4. Ständer nach einem der Ansprüche 2 oder 3, dadurch gekennzeichnet, daß die äußere Hülse (25) in eine Vertiefung (31) eines Ansatzes (14) des Halters (5) ragt, mit dem diese in dem abgewinkelten Ende (13) des Trägers (4) gehalten ist, und daß vorzugsweise die lichte Weite der Vertiefung (31) mindestens gleich der Länge der äußeren Hülse (25) ist.

5. Ständer nach einem der Ansprüche 2 bis 4, dadurch gekennzeichnet, daß die äußere Hülse (25) länger ist als der kürzere Hülsenteil (24) der inneren Hülse (24, 25).

6. Ständer nach einem der Ansprüche 2 bis 5, dadurch gekennzeichnet, daß die Hülsenteile (23, 24) der inneren Hülse (23, 24) in der zylindrischen Wandung des Ansatzes (14) des Halters (4) aneinanderstoßen, und daß vorzugsweise die Stoßstelle der inneren Hülse (23, 24) etwa in halber Dicke der zylindrischen Wandung des Ansatzes (14) liegt.

7. Ständer, bei dem der Halter ein Klemmteil für ein Fahrradmittelrohr und eine Durchziehöffnung für eine Diebstahlsicherung, wie eine Kette, ein Drahtseil, einen Bügel oder dgl. hat, nach einem der Ansprüche 1 bis 6, dadurch gekennzeichnet, daß die Durchziehöffnung (37) durch eine Öse (36) eines weiteren Sicherungsteiles (22) gebildet ist, das in einer zwischem dem Ansatz (14) und dem Klemmteil (16) des Halters (5) liegenden Öffnung (20) gehalten ist.

8. Ständer nach Anspruch 7, dadurch gekennzeichnet, daß das weitere Sicherungsteil (22) durch eine Spannhülse (32) in seiner Lage gesichert ist, und daß vorzugsweise das weitere Sicherungsteil (22) mit einem bolzenartigen Steckteil (21) in der Öffnung des Halters (5) liegt.

9. Ständer nach Anspruch 8, dadurch gekennzeichnet, daß das Steckteil (21) des weiteren Sicherungsteiles (22) etwa in halber Länge eine sacklochartige Öffnung (33) hat, in der die Spannhülse (32) mit Preßsitz liegt, und daß vorzugsweise die Spannhülse (32) senkrecht zum Steckteil (21) liegt und mit ihrem einen Ende (32) in die Verteifung (31) des zylindrischen Ansatzes (14) des Halters (5) ragt.

## Claims

1. A stand (1) for bicycles with an upwardly projecting carrier (4) which has a stand part (7) extending substantially at right angles thereto and to which is fastened a holder (5) with at least one securing component (15), which projects through openings (26, 27 and 28) in the holder (5) and in the stand part (7),
**characterised in that** the securing component (15) is in the form of a composite clamping sleeve with at least one inner and one outer sleeve (23, 24 and 25), and the outer sleeve (25) thereof is positioned with press fit in the opening (27) of the holder (5) and with press fit on the inner sleeve (23, 24).

2. A stand according to Claim 1, **characterised in that** the securing component (15) is in the form of steps and preferably comprises a divided inner sleeve (23, 24) and an outer sleeve (25).

3. A stand according to Claim 2, **characterised in that** the inner sleeve parts (23, 24) are of different lengths, and preferably the outer sleeve (25) is shorter than the inner sleeve (25, 26) [sic].

4. A stand according to either Claim 2 or 3, **characterised in that** the outer sleeve (25) projects into a recess (31) of an extension (14) of the holder (5) used to support the said outer sleeve at the angular end (13) of the carrier (4), and that preferably the internal width of the recess (31) is at least the same length as the outer sleeve (25).

5. A stand according to any one of Claims 2 to 4, **characterised in that** the outer sleeve (25) is longer than the shorter sleeve part (24) of the inner sleeve (24, 25) [sic].

6. A stand according to any one of Claims 2 to 5, **characterised in that** the sleeve parts (23, 24) of the inner sleeve (23, 24) abut against each other in the cylindrical wall of the extension (14) of the holder (4) [sic], and preferably the contact point of the inner sleeve (23, 24) is approximately at half the thickness of the cylindrical wall of the extension (14).

7. A stand, in which the holder has a clamping component for the central tube of a bicycle and a through hole for protection against thieves, such as a chain, a wire rope, a strap or the like, according to any one of Claims 1 to 6, **characterised in that** the through hole (37) is formed by a loop (36) of a further securing component (22) which is held in an opening (20) located between the extension (14) and the clamping part (16) of the holder (5).

8. A stand according to Claim 7, **characterised in that** the other securing component (22) is secured in its position by a clamping sleeve (32), and preferably the other securing component (22) is positioned with a bolt-like plug component (21) in the opening of the holder (5).

9. A stand according to Claim 8, **characterised in that** about half-way along its length the plug component (21) of the other securing component (22) has an opening (33) in the manner of a blind hole in which the clamping sleeve (32) is positioned with press fit, and preferably the clamping sleeve (32) is perpendicular to the plug component (21), and one end (32) thereof projects into the recess (31) of the cylindrical extension (14) of the holder (5).

## Revendications

1. Console (1) pour bicyclettes, comprenant un support (4) dirigé vers le haut, qui comprend une partie de console (7) s'étendant sensiblement perpendiculairement à ce support, et à laquelle est fixée une monture (5) munie d'au moins un élément de sécurité (15), qui s'étend à travers des ouvertures (26, 27 et 28) ménagées dans la monture (5) et dans la partie (7) de la console,
caractérisée en ce que l'élément de sécurité (15) est constitué par une douille de serrage composite comprenant au moins une douille intérieure et une douille extérieure (23, 24 et 25), dont la douille extérieure (25) est emmanchée dans l'ouverture (27) de la monture (5) avec ajustement à serrage et emmanchée sur la douille intérieure (23, 24) avec ajustement à serrage.

2. Console selon la revendication 1, caractérisée en ce que l'élément de sécurité (15) est de configuration échelonnée et est de préférence constitué par une douille intérieure divisée (23, 24) et par une douille extérieure (25).

3. Console selon la revendication 2, caractérisée en ce que les parties (23, 24) de la douille intérieure sont de différentes longueurs et en ce que la douille extérieure (25) est de préférence à plus courte que la douille intérieure (25, 26).

4. Console selon une des revendications 2 et 3, caractérisée en ce que la douille extérieure (25) est engagée dans un évidement (31) d'un téton (14) de la monture (5), par lequel cette monture est retenue dans l'extrémité coudée (13) du support (4) et en ce que la largeur libre de l'évidement (31) est au moins égal à la longueur de la douille extérieure (25).

5. Console selon une des revendications 2 à 4, caractérisée en ce que la douille extérieure (25) est plus longue que la partie courte (24) de la douille intérieure (24, 25).

6. Console selon une des revendications 2 à 5, caractérisée en ce que les parties (23, 24) de la douille intérieure (23, 24) sont en appui l'une contre l'autre dans la paroi cylindrique du téton (14) de la monture (4) et en ce que le joint de la douille intérieure (23, 24) se trouve à peu près à mi-épaisseur de la paroi cylindrique du téton (14).

7. Console dans laquelle la monture possède une partie pince pour un tube central de bicyclette et une ouverture d'enfilage pour une sécurité anti-vol telle qu'une chaîne, un câble, un crochet ou analogue, selon une des revendications 1 à 6, caractérisée en ce que l'ouverture d'enfilage (37) est formée par un anneau (36) appartenant à un autre élément de sécurité (22) qui est retenu dans une ouverture (20) située entre le téton (14) et l'élément formant pince (16) de la monture (5).

8. Console selon la revendication 7, caractérisée en ce que l'autre élément d'immobilisation (22) est bloqué dans sa position par une douille de serrage (32) et en ce que l'autre élément d'immobilisation (22) est de préférence logé dans l'ouverture du support (5) par une partie mâle (21) en forme de broche.

9. Console selon la revendication 8, caractérisée en ce que la partie mâle (21) de l'autre élément d'immobilisation (22) a peu près à mi-longueur une ouverture (33) en forme de trou borgne dans laquelle la douille de serrage (32) est logée à ajustement à serrage et en ce que la douille de serrage (32) est de préférence disposée perpendiculairement à l'élément mâle (21) et est engagée dans l'évidement (31) du téton cylindrique (14) de la monture (5) par une (32) de ses extrémités.
